# EUROPEAN PATENT APPLICATION

(11) **EP 4 406 769 A1**
(43) Date of publication of application: **31.07.2024**
(21) Application number: 23218903.5
(22) Date of filing: 20.12.2023
(51) Int. Cl.: B60L 1/00, B60L 53/30, B60L 53/65, B60L 53/66, B60L 53/80, B60K 1/04, B60S 5/06, H01M 10/625

(54) **BATTERY SWAP CONTROL METHOD, BATTERY SWAP CONTROL SYSTEM, AND COMPUTER STORAGE MEDIUM**

(30) Priority: 29.01.2023 CN 202310043118
(71) Applicant: Nio Technology (Anhui) Co., Ltd, Hefei City, Anhui 230601 (CN)
(72) Inventor: ZHANG, Yongxiang, Hefei, Anhui 230601 (CN); SUN, Zhe, Hefei, Anhui 230601 (CN); SUN, Weiwang, Hefei, Anhui 230601 (CN); ZHANG, Ligui, Hefei, Anhui 230601 (CN); ZHENG, Feifei, Hefei, Anhui 230601 (CN); WANG, Shuai, Hefei, Anhui 230601 (CN); GUO, Chao, Hefei, Anhui 230601 (CN); ZHU, Yue, Hefei, Anhui 230601 (CN); ZOU, Jiyong, Hefei, Anhui 230601 (CN); LAI, Jianwen, Hefei, Anhui 230601 (CN); YANG, Chao, Hefei, Anhui, 230601 (CN)
(74) Representative: Vossius & Partner Patentanwälte Rechtsanwälte mbB

(57) **Abstract**

The disclosure relates to the technical field of battery swapping, and more specifically, to a battery swap control method for a battery swap station, a battery swap control method for a vehicle, a battery swap control system for a battery swap station, a battery swap control system for a vehicle, and a computer storage medium. The battery swap control method for a battery swap station according to an aspect of the disclosure includes: in response to receiving a battery swap start signal from a vehicle with a battery to be swapped (101), performing a mechanical battery swap preparation operation in parallel with a battery swap preparation operation of the vehicle with a battery to be swapped; in response to completing the mechanical battery swap preparation operation and receiving a battery swap preparation operation completion signal from the vehicle with a battery to be swapped, performing a mechanical battery swap operation (103); and in response to completing the mechanical battery swap operation, performing a mechanical battery swap end operation in parallel with a battery swap end operation of the vehicle with a battery to be swapped (105).

## Description

### Technical Field

The disclosure relates to the technical field of battery swapping, and more specifically, to a battery swap control method for a battery swap station, a battery swap control method for a vehicle, and a battery swap control system for a battery swap station, a battery swap control system for a vehicle, and a computer storage medium.

### Background Art

At present, there are mainly two modes of energy replenishment for a battery electric vehicle, namely, vehicle charging and battery swapping. In the vehicle charging mode, AC slow charging causes a long charging time and is limited by a parking place; DC fast charging shortens the charging time through a high power, but has a great impact on a power grid and reduces the service life of the battery. In the battery swapping mode, the battery swap station can implement orderly charging by interacting with the power grid, and improve the overall utilization efficiency of a power device, thereby quickly replenishing the electric vehicle with energy, reducing a waiting time of a user, and not reducing the service life of the battery. Therefore, the battery swapping mode is of high promotion value and economic significance in the public transportation field in Chinese cities.

With the increasing intelligence and mechanization degree of the battery swap station, the battery swap station has basically implemented automation and intelligence in many scenarios. However, the current battery swap station still has many defects. For example, during a battery swapping process, an operation of a vehicle with a battery to be swapped and an operation of the battery swap station need to be performed sequentially, resulting in a long battery swapping time, and thus low battery swapping efficiency.

### Summary

In order to solve or at least alleviate one or more of the above problems, the following technical solutions are provided.

According to a first aspect of the disclosure, there is provided a battery swap control method for a battery swap station. The method includes: in response to receiving a battery swap start signal from a vehicle with a battery to be swapped, performing a mechanical battery swap preparation operation in parallel with a battery swap preparation operation of the vehicle with a battery to be swapped; in response to completing the mechanical battery swap preparation operation and receiving a battery swap preparation operation completion signal from the vehicle with a battery to be swapped, performing a mechanical battery swap operation; and in response to completing the mechanical battery swap operation, performing a mechanical battery swap end operation in parallel with a battery swap end operation of the vehicle with a battery to be swapped.

According to the battery swap control method for a battery swap station according to an embodiment of the disclosure, the method further includes: in response to completing the mechanical battery swap operation, sending a mechanical battery swap operation completion signal to the vehicle with a battery to be swapped, to notify the vehicle with a battery to be swapped to perform the battery swap end operation.

According to the battery swap control method for a battery swap station according to an embodiment or any one of the above embodiments of the disclosure, the battery swap preparation operation of the vehicle with a battery to be swapped includes one or more of the following: authenticating a vehicle identity, obtaining vehicle information and battery information and sending the vehicle information and the battery information to the battery swap station, setting to neutral, resetting a steering wheel, disconnecting a high voltage, and entering a sleep mode.

According to the battery swap control method for a battery swap station according to an embodiment or any one of the above embodiments of the disclosure, the mechanical battery swap preparation operation includes one or more of the following: detecting a wheel positioning apparatus, starting a wheel fixing apparatus, opening a battery swap retractable door, raising the vehicle, starting a battery swap device, and unlocking a used battery.

According to the battery swap control method for a battery swap station according to an embodiment or any one of the above embodiments of the disclosure, the mechanical battery swap operation includes operations from unloading a used battery to mounting a fully charged battery.

According to the battery swap control method for a battery swap station according to an embodiment or any one of the above embodiments of the disclosure, the battery swap end operation of the vehicle with a battery to be swapped includes one or more of the following: detecting a battery, making payment, and obtaining vehicle information and battery information and sending the vehicle information and battery information to the battery swap station.

According to the battery swap control method for a battery swap station according to an embodiment or any one of the above embodiments of the disclosure, the mechanical battery swap end operation includes one or more of the following: locking a fully charged battery, resetting a battery swap device, lowering the vehicle, closing a battery swap retractable door, and resetting a wheel fixing apparatus.

According to the battery swap control method for a battery swap station according to an embodiment or any one of the above embodiments of the disclosure, the method further includes: in response to completing the mechanical battery swap end operation, sending a mechanical battery swap end operation completion signal to the vehicle with a battery to be swapped, to notify the vehicle with a battery to be swapped to exit a battery swap mode.

According to a second aspect of the disclosure, there is provided a battery swap control method for a vehicle. The method includes: sending a battery swap start signal to a battery swap station, to notify the battery swap station to perform a mechanical battery swap preparation operation; performing a battery swap preparation operation in parallel with the mechanical battery swap preparation operation of the battery swap station; in response to completing the battery swap preparation operation, sending a battery swap preparation operation completion signal to the battery swap station, to notify the battery swap station to perform a mechanical battery swap operation; and in response to receiving a mechanical battery swap operation completion signal from the battery swap station, performing a battery swap end operation in parallel with a mechanical battery swap end operation of the battery swap station.

According to the battery swap control method for a vehicle according to an embodiment of the disclosure, the method further includes: supplying power to a head unit entertainment system with an automotive battery during the mechanical battery swap operation being performed by the battery swap station.

According to the battery swap control method for a vehicle according to an embodiment or any one of the above embodiments of the disclosure, the battery swap preparation operation includes one or more of the following: authenticating a vehicle identity, obtaining vehicle information and battery information and sending the vehicle information and the battery information to the battery swap station, setting to neutral, resetting a steering wheel, disconnecting a high voltage, and entering a sleep mode.

According to the battery swap control method for a vehicle according to an embodiment or any one of the above embodiments of the disclosure, the mechanical battery swap preparation operation of the battery swap station includes one or more of the following: detecting a wheel positioning apparatus, starting a wheel fixing apparatus, opening a battery swap retractable door, raising the vehicle, starting a battery swap device, and unlocking a used battery.

According to the battery swap control method for a vehicle according to an embodiment or any one of the above embodiments of the disclosure, the mechanical battery swap operation includes operations from unloading a used battery to mounting a fully charged battery.

According to the battery swap control method for a vehicle according to an embodiment or any one of the above embodiments of the disclosure, the battery swap end operation includes one or more of the following: detecting a battery, making payment, and obtaining vehicle information and battery information and sending the vehicle information and battery information to the battery swap station.

According to the battery swap control method for a vehicle according to an embodiment or any one of the above embodiments of the disclosure, the mechanical battery swap end operation of the battery swap station includes one or more of the following: locking a fully charged battery, resetting a battery swap device, lowering the vehicle, closing a battery swap retractable door, and resetting a wheel fixing apparatus.

According to the battery swap control method for a vehicle according to an embodiment or any one of the above embodiments of the disclosure, the method further includes: in response to completing the battery swap end operation and receiving a mechanical battery swap end operation completion signal from the battery swap station, exiting a battery swap mode.

According to a third aspect of the disclosure, there is provided a battery swap control system for a battery swap station. The system includes: a memory; a processor coupled to the memory; and a computer program stored on the memory and running on the processor. The computer program runs to cause the steps of the battery swap control method for a battery swap station according to the first aspect of the disclosure to be performed.

According to a fourth aspect of the disclosure, there is provided a battery swap control system for a vehicle. The system includes: a memory; a processor coupled to the memory; and a computer program stored on the memory and running on the processor. The computer program runs to cause the steps of the battery swap control method for a vehicle according to the second aspect of the disclosure to be performed.

According to a fifth aspect of the disclosure, there is provided a computer storage medium, including instructions. When the instructions are executed, the steps of the battery swap control method for a battery swap station according to the first aspect of the disclosure are performed.

According to a sixth aspect of the disclosure, there is provided a computer storage medium, including instructions. When the instructions are executed, the steps of the battery swap control method for a vehicle according to the second aspect of the disclosure are performed.

According to the battery swap control solution in one or more embodiments of the disclosure, it is possible to perform the battery swap preparation operation of the vehicle and the mechanical battery swap preparation operation of the battery swap station in parallel, and to perform the battery swap end operation of the vehicle and the mechanical battery swap end operation of the battery swap station in parallel. In this way, the battery swap operation of the battery swap station and the battery swap operation of the vehicle are performed in parallel, which reduces a battery swap time for the vehicle and the battery swap station, improves battery swap efficiency and utilization of the battery swap station, and provides users with a convenient and efficient battery swapping experience.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the drawings:
FIG. 1 is a flowchart of a battery swap control method for a battery swap station according to one or more embodiments of the disclosure;
FIG. 2 is a flowchart of a battery swap control method for a vehicle according to one or more embodiments of the disclosure;
FIG. 3 is a block diagram of a battery swap control system for a battery swap station according to one or more embodiments of the disclosure;
FIG. 4 is a block diagram of a battery swap control system for a vehicle according to one or more embodiments of the disclosure; and
FIG. 5 is a flowchart of a battery swap control method according to one or more embodiments of the disclosure.

### Detailed Description of Embodiments

The disclosure is described below more comprehensively with reference to the accompanying drawings in which illustrative embodiments of the disclosure are shown. However, the disclosure may be implemented in different forms, and should not be construed as being limited to the embodiments provided herein. The embodiments provided above are intended to make the disclosure of this specification comprehensive and complete, to more comprehensively convey the scope of protection of the disclosure to those skilled in the art.

In this specification, the terms such as "include" and "comprise" indicate that in addition to the units and steps that are directly and explicitly described in the specification and claims, other units and steps that are not directly or explicitly described are not excluded in the technical solutions of the disclosure.

Unless otherwise specified, the terms such as "first" and "second" are not used to indicate sequences of units in terms of time, space, size, etc., and are only used to distinguish between the units.

The term "vehicle" or "vehicle with a battery to be swapped" in the specification are intended to indicate any suitable vehicle having a drive system including at least a battery, a power conversion device, and a drive motor. For example, the term "vehicle" or "vehicle with a battery to be swapped" can include a hybrid vehicle, an electric vehicle, a plug-in hybrid electric vehicle, and the like. The hybrid vehicle is a vehicle with two or more power sources, such as a vehicle powered by a gasoline engine and an electric motor. The term "battery swap station" in the specification refers to a place where a battery swapping service is provided for vehicles, and electric energy is supplied to the vehicles in the place through battery swapping operations.

Various exemplary embodiments according to the disclosure will be described below in detail with reference to the accompanying drawings.

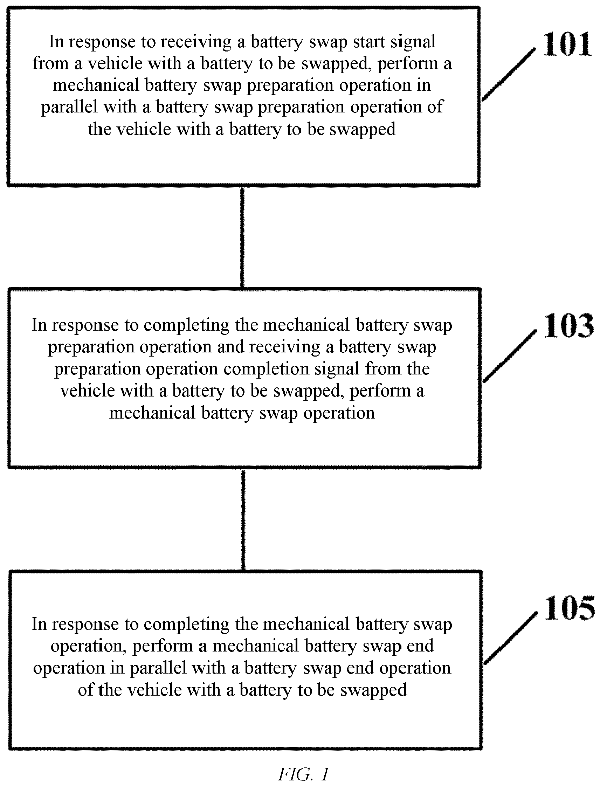

FIG. 1 is a flowchart of a battery swap control method for a battery swap station according to one or more embodiments of the disclosure.

As shown in FIG. 1, in step 101, in response to receiving a battery swap start signal from a vehicle with a battery to be swapped, a battery swap station performs a mechanical battery swap preparation operation in parallel with a battery swap preparation operation of the vehicle with a battery to be swapped.

Optionally, a communication link may be established between the vehicle with a battery to be swapped and the battery swap station via WiFi, Bluetooth, a local area network, 3G/4G/5G, UWB, or the like, for transmitting signals described in the context of the disclosure, such as a battery swap start signal, a battery swap preparation operation completion signal, a mechanical battery swap operation completion signal, and a mechanical battery swap end operation completion signal.

In the context of the disclosure, the battery swap preparation operation of the vehicle with a battery to be swapped may include, but is not limited to, various preparations performed by the vehicle with a battery to be swapped for a battery swap operation, such as authenticating a vehicle identity, obtaining vehicle information and battery information and sending the obtained vehicle information and battery information to the battery swap station, setting to neutral, resetting a steering wheel, disconnecting a high voltage, and entering a sleep mode.

In the context of the disclosure, the mechanical battery swap preparation operation may include, but is not limited to, various preparations performed by the battery swap station for the battery swap operation, such as detecting a wheel positioning apparatus, starting a wheel fixing apparatus, opening a battery swap retractable door, raising the vehicle, starting a battery swap device, and unlocking a used battery. For example, the battery swap device may include various mechanical devices of the battery swap station that are used for the battery swap operation, such as a battery swap robot.

In step 103, in response to completing the mechanical battery swap preparation operation and receiving a battery swap preparation operation completion signal from the vehicle with a battery to be swapped, a mechanical battery swap operation is performed.

In the context of the disclosure, the mechanical battery swap operation may include various operations from unloading a used battery to mounting a fully charged battery that are performed by the battery swap station, and for example, may include, but is not limited to, unloading the used battery by the battery swap robot, lowering the vehicle, closing the battery swap retractable door, resetting the used battery by the battery swap robot, mounting the fully charged battery by the battery swap robot, opening the battery swap retractable door, raising the vehicle, and other operations.

In step 105, in response to completing the mechanical battery swap operation, a mechanical battery swap end operation is performed in parallel with a battery swap end operation of the vehicle with a battery to be swapped.

In the context of the disclosure, the battery swap end operation of the vehicle with a battery to be swapped may include, but is not limited to, various operations performed by the vehicle with a battery to be swapped for ending the battery swap operation, such as detecting a battery, making payment, and obtaining the vehicle information and the battery information and sending the obtained vehicle information and battery information to the battery swap station.

In the context of the disclosure, the mechanical battery swap end operation may include, but is not limited to, various operations performed by the battery swap station for ending the battery swap operation, such as locking the fully charged battery, resetting the battery swap device, lowering the vehicle, closing the battery swap retractable door, and resetting the wheel fixing apparatus.

Optionally, in step 105, after completing the mechanical battery swap operation, the battery swap station may send a mechanical battery swap operation completion signal to the vehicle with a battery to be swapped, to notify the vehicle with a battery to be swapped to perform a battery swap end operation and concurrently perform a mechanical battery swap end operation.

Optionally, the battery swap control method for a battery swap station described above may further include: after completing the mechanical battery swap end operation, sending a mechanical battery swap end operation completion signal to the vehicle with a battery to be swapped, to notify the vehicle with a battery to be swapped to exit a battery swap mode.

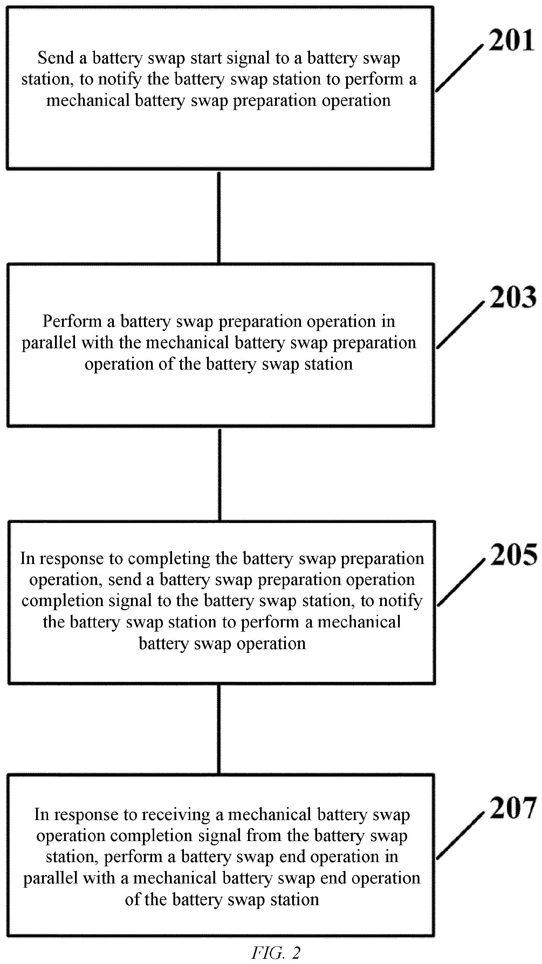

FIG. 2 is a flowchart of a battery swap control method for a vehicle according to one or more embodiments of the disclosure.

As shown in FIG. 2, in step 201, a battery swap start signal is sent to a battery swap station, to notify the battery swap station to perform a mechanical battery swap preparation operation.

In step 203, a battery swap preparation operation is performed in parallel with the mechanical battery swap preparation operation of the battery swap station.

In step 205, in response to completing the battery swap preparation operation, a battery swap preparation operation completion signal is sent to the battery swap station, to notify the battery swap station to perform a mechanical battery swap operation.

Optionally, in step 205, power may be supplied to a head unit entertainment system with an automotive battery (e.g., a small automotive battery) during the mechanical battery swap operation being performed by the battery swap station. In this way, it can be ensured that, during a battery swap process, a user can use an entertainment function of the head unit entertainment system, which improves the user's battery swap experience.

In step 207, in response to receiving a mechanical battery swap operation completion signal from the battery swap station, a battery swap end operation is performed in parallel with a mechanical battery swap end operation of the battery swap station.

Optionally, the battery swap control method for a vehicle described above may further include exiting a battery swap mode after completing the battery swap end operation and receiving a mechanical battery swap end operation completion signal from the battery swap station.

According to the battery swap control solution in one or more embodiments of the disclosure, it is possible to perform the battery swap preparation operation of the vehicle and the mechanical battery swap preparation operation of the battery swap station in parallel, and to perform the battery swap end operation of the vehicle and the mechanical battery swap end operation of the battery swap station in parallel. In this way, the battery swap operation of the battery swap station and the battery swap operation of the vehicle are performed in parallel, which reduces a battery swap time for the vehicle and the battery swap station, improves battery swap efficiency and utilization of the battery swap station, and provides users with a convenient and efficient battery swapping experience.

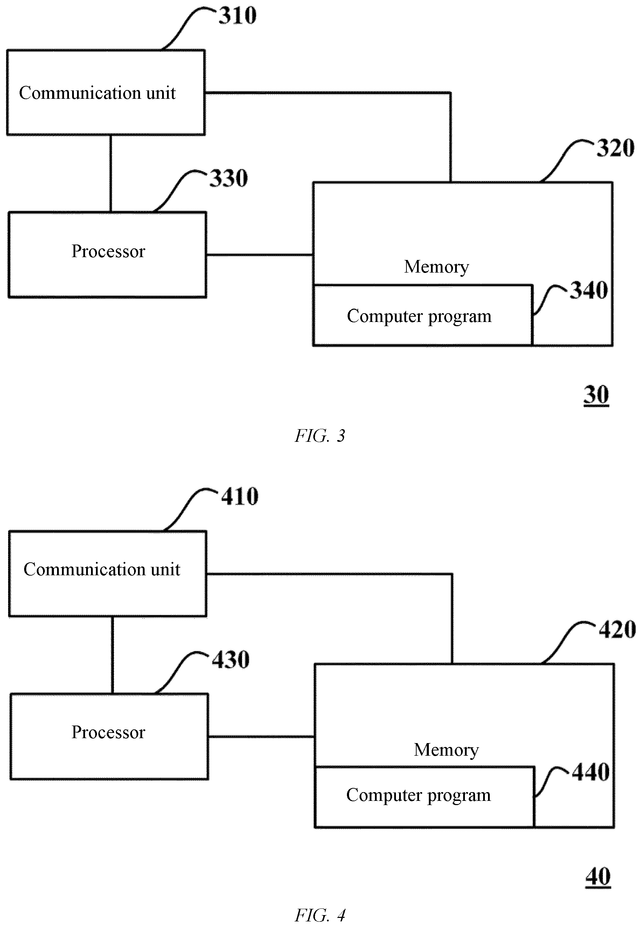

FIG. 3 is a block diagram of a battery swap control system for a battery swap station according to one or more embodiments of the disclosure.

As shown in FIG. 3, the battery swap control system 30 for a battery swap station includes a communication unit 310, a memory 320 (for example, a non-volatile memory such as a flash memory, a ROM, a hard disk drive, a magnetic disk, or an optical disc), a processor 330, and a computer program 340 stored on the memory 320 and capable of running on the processor 330.

The communication unit 310, as a communication interface, is configured to establish a communication connection between the battery swap control system 30 for a battery swap station and an external device or network (e.g., a vehicle, a cloud server, a mobile terminal, etc.), for transmitting information such as an electrical start signal, a battery swap preparation operation completion signal, a mechanical battery swap operation completion signal, and a mechanical battery swap end operation completion signal.

The memory 320 stores the computer program 340 executable by the processor 330. In addition, the memory 320 may further store data generated when the processor 330 executes the computer program and data or commands received from the outside through the communication unit 310.

The processor 330 is configured to execute the computer program 340 to implement the battery swap control method for a battery swap station according to one or more embodiments of the disclosure.

FIG. 4 is a block diagram of a battery swap control system for a vehicle according to one or more embodiments of the disclosure.

As shown in FIG. 4, the battery swap control system 40 for a vehicle includes a communication unit 410, a memory 420 (for example, a non-volatile memory such as a flash memory, a ROM, a hard disk drive, a magnetic disk, or an optical disc), a processor 430, and a computer program 440 stored on the memory 420 and capable of running on the processor 430.

The communication unit 410, as a communication interface, is configured to establish a communication connection between the battery swap control system 40 for a battery swap station and an external device or network (e.g., a vehicle, a cloud server, a mobile terminal, etc.), for transmitting information such as an electrical start signal, a battery swap preparation operation completion signal, a mechanical battery swap operation completion signal, and a mechanical battery swap end operation completion signal.

The memory 420 stores the computer program 440 executable by the processor 430. In addition, the memory 420 may further store data generated when the processor 430 executes the computer program and data or commands received from the outside through the communication unit 410.

The processor 430 is configured to execute the computer program 440 to implement the battery swap control method for a vehicle according to one or more embodiments of the disclosure.

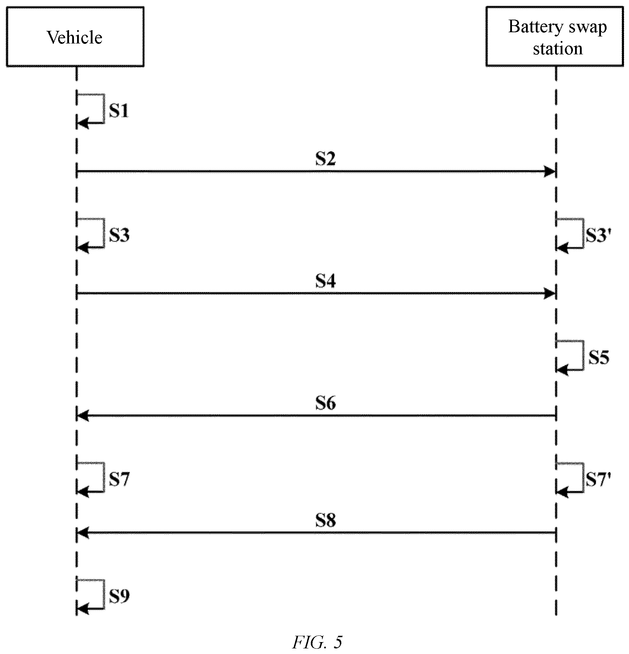

FIG. 5 is a flowchart of a battery swap control method according to one or more embodiments of the disclosure.

Referring to FIG. 5, in step S 1, after a vehicle is parked at a battery swap platform, a communication link with a battery swap station is established via WiFi, Bluetooth, a local area network, 3G/4G/5G, UWB, or the like, for transmitting signals described in the context of the disclosure, such as a battery swap start signal, a battery swap preparation operation completion signal, a mechanical battery swap operation completion signal, and a mechanical battery swap end operation completion signal.

In step S2, the vehicle sends a battery swap start signal to the battery swap station, to notify the battery swap station to perform a mechanical battery swap preparation operation.

In step S3, the vehicle performs a battery swap preparation operation. In step S3', the battery swap station performs the mechanical battery swap preparation operation in parallel with the battery swap preparation operation of the vehicle.

In an embodiment, the vehicle may authenticate a vehicle identity, obtain vehicle information and battery information and send the vehicle information and battery information to the battery swap station, set to neutral, and reset a steering wheel. In parallel with the operations described above, the battery swap station may move a push rod to clamp the vehicle but not to fully clamp the vehicle. After being moved to a working position where the vehicle is about to be clamped, the push rod is withdrawn a certain distance (e.g., 5 cm), so that after being set to neutral, the vehicle can wiggle back and forth without a wheel hub rubbing against the surface of the push rod. After the vehicle completes the operations of authenticating the vehicle identity, obtaining the vehicle information and the battery information and sending the vehicle information and the battery information to the battery swap station, setting to neutral, and resetting the steering wheel, the vehicle may send a completion signal to the battery swap station and start to disconnect a high voltage and enter a sleep mode. After receiving the completion signal, the battery swap station may perform operations from the push rod clamping the vehicle to unlocking a used battery, in parallel with the operations of the vehicle disconnecting the high voltage and entering the sleep mode.

In step S4, after completing the battery swap preparation operation, the vehicle sends a battery swap preparation operation completion signal to the battery swap station.

In step S5, after completing the mechanical battery swap preparation operation and receiving the battery swap preparation operation completion signal, the battery swap station starts to perform a mechanical battery swap operation. During the mechanical battery swap operation being performed by the battery swap station, the vehicle disconnects the high voltage and enters the sleep mode, and the used battery of the vehicle is unloaded. In the meanwhile, power may be supplied to a head unit entertainment system with an automotive battery (e.g., a small an automotive battery), so that a screen of the head unit keeps working. In this way, it can be ensured that, during a battery swap process, a user can use an entertainment function of the head unit entertainment system, which improves the user's battery swap experience.

In step S6, after completing the mechanical battery swap operation, the battery swap station sends a mechanical battery swap operation completion signal to the vehicle.

In step S7, after receiving the mechanical battery swap operation completion signal, the vehicle starts to perform a battery swap end operation. In step S7', the battery swap station performs a mechanical battery swap end operation in parallel with the battery swap end operation of the vehicle. After a male plug of an electrical connector of a fully charged battery is docked with a female plug of the electrical connector of the vehicle, the vehicle performs a high voltage connection operation.

In step S8, after completing the mechanical battery swap end operation, the battery swap station sends a mechanical battery swap end operation completion signal to the vehicle.

In step S9, after completing the battery swap end operation and receiving the mechanical battery swap end operation completion signal, the vehicle exits a battery swap mode.

The battery swap control method according to one or more embodiments of the disclosure can reduce a time for the entire battery swap procedure from 4.5 minutes to 3 minutes, which improves battery swap efficiency and utilization of the battery swap station, and provides users with a convenient and efficient battery swapping experience.

In addition, as described above, the disclosure may also be implemented as a computer-readable storage medium, including instructions. When the instructions are executed, the steps of the battery swap control method for a battery swap station and the battery swap control method for a vehicle according to one or more embodiments of the disclosure are performed.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components can be implemented as hardware components, and vice versa.

Software (such as program code and/or data) in the disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A battery swap control method for a battery swap station, comprising the following steps:
in response to receiving a battery swap start signal from a vehicle with a battery to be swapped, performing a mechanical battery swap preparation operation in parallel with a battery swap preparation operation of the vehicle with a battery to be swapped;
in response to completing the mechanical battery swap preparation operation and receiving a battery swap preparation operation completion signal from the vehicle with a battery to be swapped, performing a mechanical battery swap operation; and
in response to completing the mechanical battery swap operation, performing a mechanical battery swap end operation in parallel with a battery swap end operation of the vehicle with a battery to be swapped.

2. The method according to claim 1, further comprising:
in response to completing the mechanical battery swap operation, sending a mechanical battery swap operation completion signal to the vehicle with a battery to be swapped, to notify the vehicle with a battery to be swapped to perform the battery swap end operation.

3. The method according to claim 1 or 2, wherein the battery swap preparation operation of the vehicle with a battery to be swapped comprises one or more of the following: authenticating a vehicle identity, obtaining vehicle information and battery information and sending the vehicle information and the battery information to the battery swap station, setting to neutral, resetting a steering wheel, disconnecting a high voltage, and entering a sleep mode.

4. The method according to any one of claims 1 to 3, wherein the mechanical battery swap preparation operation comprises one or more of the following: detecting a wheel positioning apparatus, starting a wheel fixing apparatus, opening a battery swap retractable door, raising the vehicle, starting a battery swap device, and unlocking a used battery.

5. The method according to any one of claims 1 to 4, wherein the mechanical battery swap operation comprises operations from unloading a used battery to mounting a fully charged battery.

6. The method according to any one of claims 1 to 5, wherein the battery swap end operation of the vehicle with a battery to be swapped comprises one or more of the following: detecting a battery, making payment, and obtaining vehicle information and battery information and sending the vehicle information and battery information to the battery swap station.

7. The method according to any one of claims 1 to 6, wherein the mechanical battery swap end operation comprises one or more of the following: locking a fully charged battery, resetting a battery swap device, lowering the vehicle, closing a battery swap retractable door, and resetting a wheel fixing apparatus.

8. The method according to any one of claims 1 to 7, further comprising:
in response to completing the mechanical battery swap end operation, sending a mechanical battery swap end operation completion signal to the vehicle with a battery to be swapped, to notify the vehicle with a battery to be swapped to exit a battery swap mode.

9. A battery swap control method for a vehicle, comprising the following steps:
sending a battery swap start signal to a battery swap station, to notify the battery swap station to perform a mechanical battery swap preparation operation;
performing a battery swap preparation operation in parallel with the mechanical battery swap preparation operation of the battery swap station;
in response to completing the battery swap preparation operation, sending a battery swap preparation operation completion signal to the battery swap station, to notify the battery swap station to perform a mechanical battery swap operation; and
in response to receiving a mechanical battery swap operation completion signal from the battery swap station, performing a battery swap end operation in parallel with a mechanical battery swap end operation of the battery swap station.

10. The method according to claim 9, further comprising:
supplying power to a head unit entertainment system with an automotive battery during the mechanical battery swap operation being performed by the battery swap station.

11. The method according to claim 9 or 10, wherein the battery swap preparation operation comprises one or more of the following: authenticating a vehicle identity, obtaining vehicle information and battery information and sending the vehicle information and the battery information to the battery swap station, setting to neutral, resetting a steering wheel, disconnecting a high voltage, and entering a sleep mode.

12. The method according to any one of claims 9 to 11, wherein the mechanical battery swap preparation operation of the battery swap station comprises one or more of the following: detecting a wheel positioning apparatus, starting a wheel fixing apparatus, opening a battery swap retractable door, raising the vehicle, starting a battery swap device, and unlocking a used battery.

13. The method according to any one of claims 9 to 12, wherein the mechanical battery swap operation comprises operations from unloading a used battery to mounting a fully charged battery.

14. A battery swap control system for a battery swap station, the system comprising:
a memory;
a processor coupled to the memory; and
a computer program stored on the memory and running on the processor, wherein the computer program runs to cause the battery swap control method for a battery swap station according to any one of claims 1 to 8 to be performed.

15. A battery swap control system for a vehicle, the system comprising:
a memory;
a processor coupled to the memory; and
a computer program stored on the memory and running on the processor, wherein the computer program runs to cause the battery swap control method for a vehicle according to any one of claims 9 to 13 to be performed.
